# FASCICULE DE BREVET EUROPEEN

(11) **EP 0 742 977 B1**
(45) Date de publication et mention de la délivrance du brevet: **24.03.1999**
(21) Numéro de dépôt: 95907720.7
(22) Date de dépôt: 31.01.1995
(51) Int. Cl.: H04L 12/44, H04L 12/56

(54) **SYSTEME DE TRANSMISSION DE TRAINS D'IMPULSIONS**
IMPULSFOLGEN-ÜBERTRAGUNGSSYSTEM
SYSTEM FOR THE TRANSMISSION OF PULSE STREAMS

(30) Priorité: 31.01.1994 FR 9401003
(43) Date de publication de la demande: 20.11.1996
(73) Titulaire: Zoghaib, Hussein, 92290 Chatenay-Malabry (FR)
(72) Inventeur: ZOGHAIB, Hussein, F-92290 Chatenay-Malabry (FR); DANY, Jean-Claude, F-78530 Buc (FR); ANTOINE, Jacques, F-92320 Chatillon (FR)
(74) Mandataire: Peuscet, Jacques
(86) Numéro de dépôt international: FR9500104
(87) Numéro de publication internationale: WO9520849

(56) Documents cités:
- EP-A- 0 173 508
- EP-A- 0 331 573
- GB-A- 2 254 982
- US-A- 4 228 424
- A.S. TANENBAUM 'COMPUTER NETWORKS' 1989 , PRENTICE HALL INTERNATIONAL , USA * paragraphe 2.7.1. * * paragraphe 3.7.1 * * paragraphe 3.7.2 *
- LOCAL NETWORKS FOR COMPUTER COMMUNICATIONS, AMSTERDAM, NL, page 1 J.H. SALTZER ET AL. 'Source routing for campus-wide internet transport'
- PATENT ABSTRACTS OF JAPAN vol. 14, no. 139 (E-0903) 15 Mars 1990 & JP,A,02 002 761 (NEC CORP.) 08 Janvier 1990
- PATENT ABSTRACTS OF JAPAN vol. 8 no. 161 (E-257) ,26 Juillet 1984 & JP,A,59 061345 (FUJITSU KK) 7 Avril 1984,

## Description

La présente invention concerne les systèmes de transmission de trains d'impulsions destinés à assurer l'échange d'informations entre sites éloignés en acheminant l'information de proche en proche depuis l'expéditeur jusqu'au destinataire.

De tels systèmes de transmission de trains d'impulsions ont de nombreuses applications, comme la télésurveillance, la télécommande, le transfert de données. Pour des applications de ce type, notamment lorsqu'il s'agit de couvrir de longues distances, le vecteur de transmission est avantageusement la voie d'onde radioélectrique mais, bien entendu, tout autre vecteur de transmission, filaire ou non, convient également.

Plus particulièrement, la présente invention concerne un système de transmission de trains d'impulsions, dans lequel des dispositifs de transmission, comportant un émetteur et un récepteur accordés sur une même fréquence porteuse, comprennent un dispositif de transmission principal ou Maître et des dispositifs de transmission secondaires ou stations, le Maître et les stations ayant chacun une adresse propre, les impulsions transmises par ledit système étant gérées selon un protocole de communication ayant au moins une trame comportant au moins l'adresse de la station destinataire de l'information ainsi que l'adresse de la station devant relayer l'information.

Un tel système est par exemple décrit dans A.S. TANENBAUM "COMPUTER NETWORKS" 1989, PRENTICE HALL INTERNATIONAL, USA. Ce système présente l'inconvénient que les dispositifs de transmission ne communiquent pas entre eux, chaque dispositif de transmission ne conversant directement qu'avec le Maître.

Dans le brevet GB-A-2 254 982, on a décrit un système de transmission comportant des stations secondaires géographiquement reliées en chaînes ramifiées disposées en étoile à partir d'une station-racine, chaque station comportant un émetteur et un récepteur ; mais ce système est un système filaire non transposable à une transmission par voie hertzienne ; en effet, les circuits d'interface émetteurs de données peuvent tous émettre en même temps et ce, jusqu'à ce qu'ils reçoivent un écho signalant la prise en compte de leur émission. En cas de transmission hertzienne, il y aurait nécessairement des interférences et le système implique toujours une gestion des collisions d'informations par établissement de temps morts et de priorités.

La présente invention a pour but de réaliser un système de transmission dans lequel les dispositifs de transmission sont agencés en sorte que chaque dispositif de transmission peut recevoir une information provenant d'un autre dispositif de transmission et retransmettre cette information vers un autre dispositif de transmission sans collision possible entre les informations transmises en raison du fait que l'accès d'une station secondaire au réseau ne s'effectue que sur autorisation d'une station-maître.

Il est important que, pour qu'un tel système de transmission fonctionne correctement, toute perturbation soit évitée. Selon EP-A-0 331 573, on a proposé de minimiser les perturbations dues, dans certaines circonstances, à des impulsions parasites lorsque celles-ci ont des durées supérieures au temps pendant lequel la fonction réception du dispositif de transmission est coupée. Mais ceci n'est pas suffisant. En effet, les émissions des dispositifs de transmission étant multidirectionnelles, et tous les dispositifs de transmission étant activés simultanément, un même dispositif de transmission peut recevoir la même émission provenant de plusieurs dispositifs de transmission différents : des décalages dûs au temps de transmission peuvent dès lors entraîner du fait d'interférences un bruit considérable et un parasitage ou un affaiblissement local du signal résultant; chaque dispositif de transmission, destinataire ou non de l'information, répète l'information, ce qui augmente les risques de collision, voire de cacophonie générale ; on comprendra également que, les émissions successives d'un dispositif de transmission à un autre dispositif de transmission s'effectuant sans aucun contrôle, le risque d'erreurs de transmission est d'autant plus grand que le système comporte de nombreux dispositifs de transmission.

L'invention, due à la collaboration entre le déposant inventeur et deux co-inventeurs, agents de l'Ecole Supérieure d'Electricité, SUPELEC, à Gif sur Yvette (France), a pour objet un système de transmission de trains d'impulsions du type ci-dessus ne présentant pas ces inconvénients.

Selon l'invention, un système de transmission de trains d'impulsions, dans lequel des dispositifs de transmission, comportant un émetteur et un récepteur accordés sur une même fréquence porteuse, comprennent un dispositif de transmission principal ou Maître et des dispositifs de transmission secondaires ou stations, le Maître et les stations ayant chacun une adresse propre, les impulsions transmises par ledit système étant gérées selon un protocole de communication ayant au moins une trame comportant au moins l'adresse de la station destinataire de l'information ainsi que l'adresse de la station devant relayer l'information, est caractérisé par le fait que les dispositifs de transmission sont agencés en sorte que chaque dispositif de transmission peut recevoir une information provenant d'un autre dispositif de transmission et retransmettre cette information vers un autre dispositif de transmission, des moyens étant prévus pour, dans chaque dispositif de transmission, couper sa fonction réception dès que sa fonction émission est rendue opérationnelle, lesdites stations étant géographiquement disposées en chaînes ramifiées à partir du Maître, chaque chaîne comportant au moins une branche principale, lesdites branches principales étant placées en étoile autour du Maître, ladite trame comportant également l'adresse de la station expéditeur de l'information.

Avantageusement, des moyens sont prévus pour tester le bon fonctionnement de l'ensemble des stations ; ces moyens de test de bon fonctionnement de l'ensemble des stations comprennent une trame spéciale de vérification émise régulièrement vers toutes les stations.

Avantageusement, cette trame spéciale de vérification comporte en outre des moyens permettant de savoir si une station a un message à envoyer.

De préférence, chaque branche principale est constituée de sous-branches.

Avantageusement, la trame comporte des fanions de début et de fin de trame reconnus par la station réceptrice, le fanion de début de trame étant précédé de deux octets de synchronisation-bit placés en tête de la trame.

De préférence, le protocole de communication permet le contrôle de la transmission de la trame selon lequel un dialogue, établi entre la station émettrice et la station réceptrice, permet à la station émettrice de vérifier que la station réceptrice est bien en état de recevoir et à la station réceptrice d'envoyer un accusé réception de la trame à la station émettrice.

Avantageusement, des moyens sont prévus pour assurer le bon fonctionnement du système.

La transmission est effectuée par voie radioélectrique ; cette transmission est une transmission en modulation de phase, couplée à une démodulation différentielle.

Avantageusement, la puissance d'émission de chaque station est réglée en sorte que chaque station, lorsqu'elle émet, ne peut atteindre que les stations géographiquement voisines appartenant à la même branche ou sous-branche que celle à laquelle elle appartient et en ce que, si l'une des stations est en panne, la puissance des stations situées en amont et en aval, et sur la même branche, par rapport à la station en panne, est augmentée temporairement pour que les deux dites stations amont et aval puissent communiquer entre elles.

Dans une forme de réalisation, le Maître est équipé d'une antenne multidirectionnelle et chaque station est équipée d'au moins deux antennes directionnelles orientées respectivement vers au moins deux stations, un moyen commutateur permettant de rendre opérationnelle l'antenne nécessaire compte tenu de la direction de transmission choisie pour l'information en cours.

Pour mieux faire comprendre l'objet de l'invention, on va en décrire maintenant, à titre purement illustratif et non limitatif, un exemple de réalisation représenté sur les dessins annexés.

Sur ces dessins :
- la figure 1 est un schéma partiel montrant la structure du réseau qui constitue un système de transmission selon l'invention ;
- la figure 2 est un schéma bloc illustrant la constitution d'une station du système de transmission selon l'invention ;
- la figure 3 montre un exemple de structure d'une trame du protocole de communication utilisé pour la mise en oeuvre du système selon l'invention ;
- la figure 4 montre un exemple d'adressage d'une station du système selon l'invention.

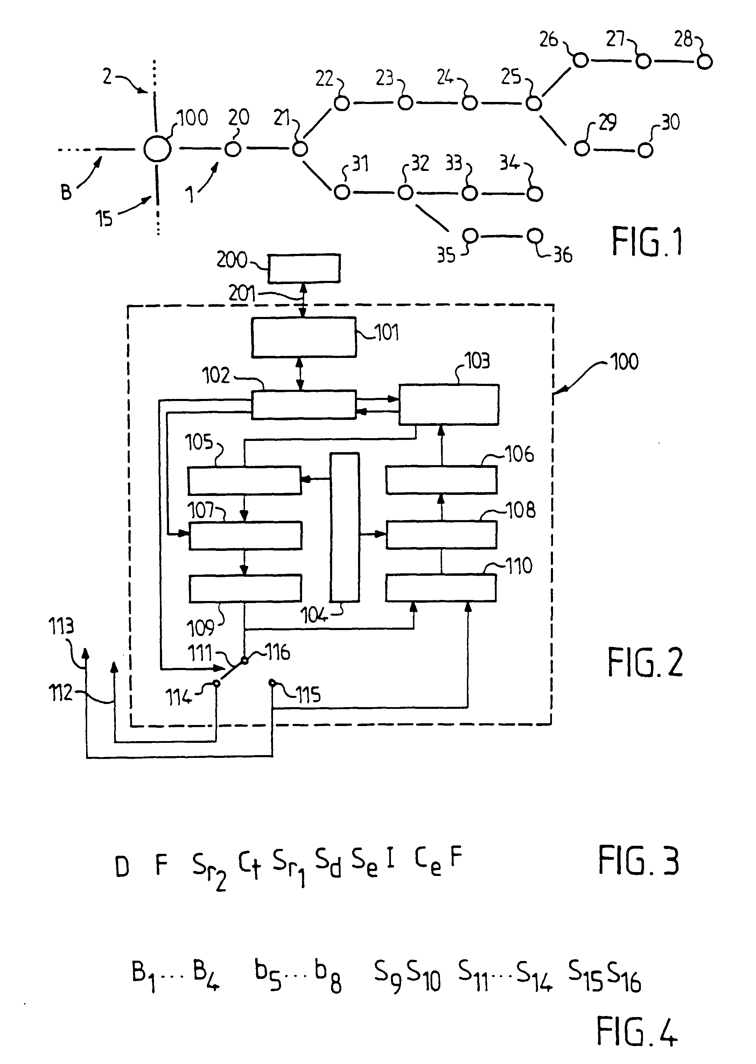

En se reportant à la figure 1, un système de transmission de trains d'impulsions, par voie radioélectrique selon l'exemple décrit, comprend un dispositif de transmission principal ou Maître 100 et des dispositifs de transmission secondaires ou stations disposées géographiquement en chaînes ramifiées à partir du Maître 100 ; chaque chaîne comprend une branche principale ; les branches principales sont placées en étoile autour du Maître 100 ; dans l'exemple qui va être décrit, quinze branches sont prévues ; sur la figure 1, seule la branche 1 a été déployée en exemple, les branches 2, B, 15 étant esquissées ; pour ne pas compliquer la figure 1, le nombre de stations a été limité ; la branche 1 est constituée de quatre sous-branches : la sous-branche 20, 21, 22 à 25, 26 à 28 - la sous-branche 20, 21, 22 à 25, 29, 30 - la sous-branche 20, 21, 31, 32, 33, 34 - la sous-branche 20, 21, 31, 32, 35, 36.

Le système de transmission selon l'invention constitue un système d'échange d'informations pour lequel sont utilisées des procédures normalisées ; de telles procédures normalisées sont bien connues et ne seront pas détaillées ici ; il suffit de se reporter, par exemple, aux documents ISO 7498 et CCITT X.200, ou à l'ouvrage "Réseaux et Télématique de G. PUJOLLE" publié aux éditions EYROLLES. Cet état de la technique comprend un protocole de communication dit HDLC (abréviation de l'expression anglaise High Data Link Control) définissant en particulier le contenu des trames transmises. La présente invention utilise, et c'est là une de ses particularités importantes, comme protocole de communication, non pas le protocole HDLC mais un protocole dérivé du protocole HDLC : en effet, le système de transmission selon l'invention transmet une trame qui inclut, non pas une seule adresse de station, qui est la station qui reçoit ou celle qui répond, comme dans le protocole HDLC, mais trois adresses, à savoir l'adresse de la station expéditeur, l'adresse de la station destinataire et l'adresse de la station qui suit la station émettrice et qui joue le rôle de relais, celle-ci étant modifiée à chaque passage.

Le Maître 100 et chaque station ont une adresse propre. En choisissant un adressage à deux octets, on peut réserver, par exemple, comme le montre la figure 4, quatre bits B₁ à B₄ pour coder le numéro de la branche à laquelle appartient la station, quatre bits b₅ à b₈ pour coder le numéro de sa sous-branche et huit bits S₉ à S₁₆ pour coder le numéro de la station dans sa sous-branche.

Ainsi, les numéros de branche vont de 0000 à 1110, le numéro 1111 étant un numéro commun à toutes les branches ; il y a donc quinze numéros de branche.

Les quatre bits b₅ à b₈ de désignation d'une sous-branche sont utilisés ainsi : les deux premiers bits b₅ et b₆ représentent le nombre de sous-branches auquel la station appartient; 00 signifie qu'elle appartient aux quatre sous-branches (station 21 par exemple), 10 signifie qu'elle appartient à deux sous-branches codées par le bit b₇ (station 24 par exemple), 01 signifie qu'elle appartient à une sous-branche codée par les deux bits b₇ et b₈ (station 29 par exemple) ; il est à noter que 11 est l'adresse commune aux quatre sous-branches.

Les huit bits S₉ à S₁₆ codent le numéro de la station dans la sous-branche ; le Maître 100 étant codé 00000000, la station la plus proche du Maître 100 est codée 00000001 et la station la plus éloignée du Maître 100 est codée 11111110 ; il y a donc deux cent cinquante quatre adresses de stations, l'adresse 11111111 étant l'adresse commune à toutes les stations.

Ainsi toutes les stations et le Maître étant adressés, la transmission s'effectue, dans un sens, entre le Maître et une station désignée par son adresse, et, dans l'autre sens, sur ordre du Maître, depuis une station désignée par son adresse vers le Maître ; dans chaque cas, les stations situées entre le Maître et la station concernée sont des relais de transfert de l'information ; la transmission s'effectue donc par bonds d'une station à une autre.

Bien entendu, le protocole utilisé, dérivé du protocole HDLC, présente aussi les avantages du protocole HDLC notamment l'unicité du format pour toutes les trames, le contrôle de toutes les trames, même les trames sans données, pour qu'en cas d'erreur l'émetteur retransmette la trame, et la transparence totale par rapport aux codes utilisés ; le protocole utilisé, dérivé du protocole HDLC, permet en outre l'identification de la station en panne, pour que, dans ce cas, non seulement le service maintenance puisse intervenir immédiatement auprès de la station défaillante mais pour qu'également les mesures soient prises pour transmettre tout de même l'information.

Le contrôle de la trame transmise, permettant de vérifier que la trame a été transmise sans erreur, est obtenu en ménageant dans chaque trame un espace pour une clé de contrôle en fin de trame, tel que montré en Cₑ sur la figure 3 ; cette clé de contrôle est fonction du contenu complet de la trame et obtenue par une opération mathématique à partir de ses constituants ; la station réceptrice disposant de l'équation mathématique fait l'opération et calcule la clé de la trame telle que reçue : la comparaison, en fin de transmission de la trame, entre la clé calculée par la station réceptrice et la clé présente en fin de trame, permet à la station réceptrice d'émettre un accusé de bonne réception ; dans le cas contraire, la station émettrice ne recevant pas cet accusé de réception réémet la trame.

L'identification de(s) station(s) en panne est obtenue en testant le bon fonctionnement du système ; à cet effet, le Maître 100 envoie régulièrement une trame spéciale comportant deux cent cinquante six bits, soit trente deux octets, tous mis à zéro, à destination de toutes les stations d'une même sous-branche ; chaque station recevant cette trame pose un 1 à l'emplacement correspondant à son numéro dans la sous-branche puis transmet cette trame à la station suivante ; la dernière station de la sous-branche renvoie la trame au Maître 100 qui repère le (ou les) bit(s) à zéro, identifiant ainsi la (ou les) station(s) en panne, ainsi bien entendu que les stations inexistantes si la sous-branche contient moins de deux cent cinquante quatre stations.

En variante, la trame spéciale est envoyée par la dernière station de la sous-branche, la plus éloignée du Maître, à la demande du Maître.

L'envoi périodique à toutes les stations de cette trame spéciale peut être mis à profit pour porter à la connaissance du Maître qu'une station a un message à envoyer, afin que celui-ci puisse mettre en oeuvre le processus d'interrogation de cette station ; à cet effet, ladite trame spéciale comporte en outre des moyens permettant de savoir si une station a un message à envoyer ; de tels moyens sont, par exemple, un bit supplémentaire réservé à chaque station, dit bit de "demande de parole", et la station qui a un message à envoyer pose un "1" à l'emplacement correspondant à son numéro dans la sous-branche pour donner cette information au Maître.

Une trame du protocole utilisé a au moins la structure suivante. En tête de la trame, sont placés deux octets D de synchronisation-bit utilisés pour la récupération du rythme, à savoir que les transitions entre les bits de ces deux octets D permettent de caler en phase l'horloge-bit de la station réceptrice avec celle de la station émettrice ; ces octets sont suivis d'un fanion F annonçant le début de la trame, lui-même suivi du deuxième octet Sr₂ de l'adresse de la station relais qui doit relayer l'information ; vient ensuite l'octet de contrôle de trame Cₜ, lui-même suivi du premier octet Sr₁ de l'adresse de la station relais, lui-même suivi de l'adresse S_{d} de la station destinataire, elle-même suivie de l'adresse Sₑ de la station expéditeur. La trame se termine par les deux octets de contrôle d'erreur Cₑ, ou clé, et par un fanion F de fin de trame ; la trame qui vient d'être décrite peut être une simple trame de supervision ; bien entendu, l'information à transmettre est portée par une trame d'information qui ne diffère de la précédente que par le fait qu'elle porte le champ d'information I ; ce champ d'information I est placé en fin de trame, entre l'adresse Sₑ de la station expéditeur et les deux octets Cₑ de contrôle d'erreur : une telle trame d'information est illustrée par la figure 3.

Dans le mode de réalisation selon lequel la transmission s'effectue par voie radioélectrique, toutes les stations sont réglées sur une même fréquence porteuse ; le choix de la fréquence porteuse est déterminé par des considérations technico-économiques visant à réduire la sensibilité au bruit et à minimiser les gains d'antennes nécessaires ; pour pouvoir rapprocher l'une de l'autre, en fonction de l'espace à atteindre, des branches ou sous-branches, chaque station est équipée d'antennes directionnelles orientées vers les stations situées sur la même sous-branche immédiatement en amont et en aval ; la fréquence porteuse est choisie en sorte que ces antennes soient de taille convenable compte tenu du gain d'antenne nécessaire ; ce gain est, comme on le sait, fonction de l'atténuation du signal entre deux stations ; selon l'exemple décrit, les stations sont distantes d'environ vingt kilomètres ; pour un rapport signal/bruit supérieur à vingt décibels pendant 99,99% du temps, le gain des antennes directionnelles doit être de l'ordre de dix décibels ; dès lors, une fréquence porteuse de 150 à 200 MHz conduit à utiliser des antennes de l'ordre de trois mètres, ce qui est une taille raisonnable ; la fréquence choisie est donc d'au moins 150 MHz. Toutefois, la démodulation étant, comme on le sait, d'autant plus sensible aux variations de la fréquence porteuse que celle-ci est élevée, pour éviter d'avoir à utiliser un oscillateur d'émission très stable et donc très coûteux, la fréquence porteuse sera limitée par exemple à 250 MHz ; ainsi, la fréquence choisie est comprise entre 150 et 250 MHz.

Pour transmettre une information, le signal porteur devant être modifié dans le temps, la modulation choisie est une modulation de phase à deux états ; une telle modulation de phase, couplée à une démodulation différentielle, présente en effet une excellente performance, eu égard à sa simplicité de mise en oeuvre. La modulation de phase est en fait une modulation d'amplitude par plus ou moins un : le signal porteur est modulé par le signal d'information dont la rapidité de modulation est choisie en fonction du débit binaire désiré ; pour un débit de 10 kbits/sec, la rapidité de modulation est de 10 kbauds.

En se reportant à la figure 2, chaque station de transmission comporte un module de transmission 100. La station étant équipée de moyens propres, tels que des moyens d'acquisition et/ou de stockage de données 200, le module de transmission 100 comporte une interface Entrée/Sortie 101 reliée par des moyens de liaison 201 aux moyens propres 200 de la station.

Le module de transmission 100 comprend principalement un microprocesseur 102 et un contrôleur de communication 103.

Le microprocesseur 102 est chargé du contrôle des flux d'informations, de la reconnaissance des trames et de leur accusé réception ; le contrôleur de communication 103 est plus particulièrement chargé du contrôle d'erreurs, de la gestion des données, de la configuration des trames conformément au protocole de transmission, de la récupération du rythme, et de la vérification d'une partie des adressages. C'est le microprocesseur 102 qui est chargé en cas de panne d'une station d'établir la transmission directement avec la station suivante ; le microprocesseur 102 contrôle, bien entendu, l'acheminement de l'information jusqu'à la station destinataire, en prenant en compte l'adresse de ladite station, après vérification de l'autre partie des adressages.

Un modulateur 105, un démodulateur 106, un émetteur 109 et un récepteur 108 assurent la transmission radioélectrique en modulation de phase.

Entre le modulateur 105 et l'émetteur 109 est disposé un atténuateur 107 qui permet de modifier la puissance d'émission d'une station émettrice lorsqu'une station voisine est en panne et qu'elle doit la sauter: cette modification est obtenue par la mise à zéro de l'atténuation qui est prévue pour le fonctionnement normal ; cette atténuation normale est par exemple de l'ordre de dix décibels.

La fréquence porteuse utilisée par le modulateur 105 est générée par un synthétiseur de fréquence 104 ; cette fréquence porteuse émise par le synthétiseur de fréquence 104 est également utilisée par le récepteur 108.

Le récepteur 108 est protégé, compte tenu de la puissance de l'émetteur 109, par un dispositif de découplage ou découpleur 110. Le module de transmission 100 est relié par ses bornes 114 et 115 à deux antennes directionnelles respectivement 112 et 113 ; le récepteur 108 est relié par l'intermédiaire du découpleur 110, d'une part, en permanence à l'antenne 113 et, d'autre part, à la borne commune 116 d'un commutateur 111 à deux positions, une position dans laquelle il relie la borne 116 à la borne 114 donc à l'antenne 112, et une autre position dans laquelle il relie la borne 116 à la borne 115 donc à l'antenne 113 ; l'émetteur 109 est relié à la borne 116, en sorte que l'émetteur n'est susceptible de n'émettre que par une seule des deux antennes 112 et 113, en fonction de la position du commutateur 111 : ceci permet, en évitant une émission dans les deux directions, d'induire d'éventuelles interférences nuisibles pour les autres stations. Le commutateur 111 est géré par le microprocesseur 102 et, bien entendu, lorsque la station est en veille, le microprocesseur 102 place le commutateur 111 dans la position pour laquelle les bornes 116 et 114 sont reliées, position qui est celle représentée sur la figure 2, ce qui permet à la station d'être prête à recevoir un message d'où qu'il vienne, c'est-à-dire depuis la station située en amont ou depuis la station située en aval, sur la même sous-branche qu'elle.

Lorsqu'une station est en panne, l'information saute ladite station à destination de la station suivante ; les antennes étant directionnelles, ceci n'est possible que si l'antenne de la station précédant celle qui est en panne est orientée non seulement vers ladite station en panne, mais également vers la station qui la suit ; ou bien ceci n'est pas possible géographiquement, ou bien ceci risque de créer des interférences entre stations ; pour pallier ces inconvénients il est possible, selon une variante, d'équiper les stations, disposées respectivement en amont et en aval d'une station, de deux antennes directionnelles orientées dans le même sens de transfert de l'information mais l'une vers la station voisine et l'autre vers la station suivante. Pour ne pas doter chaque station d'une puissance d'émission trop importante, tout en permettant à l'information, en cas de panne d'une station, de sauter ladite station, il est possible de disposer les stations d'une même sous-branche à environ dix kilomètres l'une de l'autre au lieu de vingt, comme décrit ci-dessus.

Le système de transmission fonctionne de la manière suivante. Le Maître 100 échange des informations avec une station d'une même branche en interrogeant la station de la branche par exemple la station 28 la plus éloignée, la réponse de cette station 28 étant bloquée dans la station 20 la plus proche du Maître 100 ; bien entendu, pendant que cette information transite par toutes les stations, le Maître 100 peut échanger des informations avec une autre station d'une autre branche ; de façon à avoir la réponse à sa première question, le Maître interroge la station la plus proche périodiquement jusqu'à ce qu'il ait obtenu la réponse ; il peut alors interroger une autre station, et ainsi de suite. Comme on le voit, le Maître communique avec les différentes branches les unes après les autres, en envoyant successivement les messages destinés à une station à chaque branche et à collecter périodiquement les réponses. Grâce à ce système, il est possible pour chaque station de communiquer avec n'importe quelle autre station, ces deux stations appartenant ou non à la même sous-branche.

On a décrit une trame d'information portant la totalité de l'information I; il est possible de découper une information à transmettre en plusieurs tronçons et de disposer ainsi de plusieurs trames pour transmettre la totalité de l'information ; une telle disposition peut dans certains cas permettre un gain en rapidité de transfert de l'information, chacune desdites trames comportant environ une trentaine d'octets d'information.

Comme cela a été dit plus haut, le système de transmission peut utiliser la voie de transmission filaire ; bien entendu, selon cette variante, le vecteur radioélectrique est remplacé par le vecteur filaire : la ramification filaire des branches en étoile à partir du Maître est assurée par des liaisons filaires entre les stations des différentes branches, toutes les stations étant reliées selon un réseau analogue à celui représenté à la figure 1 ; chacune des antennes directives équipant une station radioélectrique est remplacée par une liaison filaire.

## Revendications

1. Système de transmission de trains d'impulsions, dans lequel des dispositifs de transmission, comportant un émetteur (109) et un récepteur (108) accordés sur une même fréquence porteuse, comprennent un dispositif de transmission principal ou Maître (100) et des dispositifs de transmission secondaires ou stations (20-36), le Maître (100) et les stations (20-36) ayant chacun une adresse propre, les stations (20-36) ne pouvant émettre que sur sollicitation du Maître (100), les impulsions transmises par ledit système étant gérées selon un protocole de communication ayant au moins une trame (D-F) comportant au moins l'adresse (S_{d}) de la station destinataire de l'information ainsi que l'adresse (Sr₁, Sr₂) de la station devant relayer l'information, caractérisé par le fait que lesdites stations (20-36) sont géographiquement disposées en chaînes ramifiées à partir du Maître, chaque chaîne comportant au moins une branche principale (1-15), lesdites branches principales (1-15) étant placées en étoile autour du Maître (100), ladite trame (D-F) comportant également l'adresse (Sₑ) de la station expéditeur de l'information, chaque dispositif de transmission comportant, d'une part, des moyens pour recevoir une information provenant d'un premier dispositif de transmission unique et retransmettre cette information vers un autre dispositif de transmission unique et, d'autre part, des moyens pour couper sa fonction réception dès que sa fonction émission est rendue opérationnelle, l'état de fonctionnement de chaque station étant testé par l'émission d'une trame spéciale de vérification envoyée régulièrement, de façon permanente, vers toutes les stations (20-36).

2. Système selon la revendication 1, caractérisé par le fait que la trame spéciale de vérification comporte des moyens permettant de savoir si une station (20-36) a un message à envoyer, la réception de cette information par le Maître (100) déclenchant un processus d'interrogation émit par le Maître (100) à destination de la station (20-36) concernée, pour que ladite station émette son message.

3. Système selon l'une des revendications 1 ou 2, caractérisé par le fait que chaque branche (1-15) principale comporte des sous-branches.

4. Système selon l'une des revendications 1 à 3, caractérisé par le fait que la trame (D-F) comporte des fanions (F) de début et de fin de trame (D-F) reconnus par la station (20-36) réceptrice, le fanion (F) de début de trame étant précédé de deux octets (D) de synchronisation-bit placés en tête de la trame (D-F).

5. Système selon l'une des revendications 1 à 4, caractérisé par le fait que le protocole de communication permet le contrôle de la transmission de la trame (D-F) selon lequel un dialogue, établi entre la station (20-36) émettrice et la station (20-36) réceptrice, permet à la station émettrice de vérifier que la station réceptrice est bien en état de recevoir et à la station réceptrice d'envoyer un accusé réception de la trame à la station émettrice.

6. Système selon l'une des revendications 1 à 5, caractérisé par le fait que la transmission est effectuée par voie radioélectrique.

7. Système selon la revendication 6, caractérisé par le fait que la transmission est une transmission en modulation de phase, couplée à une démodulation différentielle.

8. Système selon l'une des revendications 4 à 7, caractérisé par le fait que la puissance d'émission de chaque station est réglée en sorte que chaque station, lorsqu'elle émet, ne peut atteindre que les stations géographiquement voisines appartenant à la même branche ou sous-branche que celle à laquelle elle appartient et en ce que, si l'une des stations est en panne, la puissance des stations situées en amont et en aval, et sur la même branche, par rapport à la station en panne, est augmentée temporairement pour que les deux dites stations amont et aval puissent communiquer entre elles, des moyens étant prévus pour assurer le bon fonctionnement du système.

9. Système selon l'une des revendications 1 à 8, caractérisé par le fait que le Maître (100) est équipé d'une antenne multidirectionnelle et chaque station est équipée d'au moins deux antennes (112, 113) directionnelles orientées respectivement vers au moins deux stations, un moyen commutateur (111) permettant de rendre opérationnelle l'antenne nécessaire compte tenu de la direction de transmission choisie pour l'information en cours.

## Claims

1. System for transmitting pulse trains, in which transmission devices, including a transmitter (109) and a receiver (108) which are tuned to the same carrier frequency, comprise a main transmission device or Master (100) and secondary transmission devices or stations (20-36), the Master (100) and the stations (20-36) each having their own address, the stations (20-36) being capable of sending only at the instigation of the Master (100), the pulses transmitted by the said system being managed according to a communication protocol having at least one frame (D-F) including at least the address (S_{d}) of the target station for the information as well as the address (Sr₁, Sr₂) of the station which is to relay the information, characterized in that the said stations (20-36) are geographically arranged in bifurcating chains starting from the Master, each chain having at least one main branch (1-15), the said main branches (1-15) being placed in a star around the Master (100), the said frame (D-F) also including the address (Sₑ) of the station from which the information originates, each transmission device including, on the one hand, means for receiving information coming from a single first transmission device and for re-transmitting this information to another single transmission device and, on the other hand, means for suspending its reception function as soon as its sending function has been made operational, the operating status of each station being tested by sending a special verification frame which is delivered regularly, continually, to all the stations (20-36).

2. System according to Claim 1, characterized in that the special verification frame includes means for ascertaining whether a station (20-36) has a message to deliver, the reception of this information by the Master (100) initiating an interrogation procedure sent by the Master (100) to the station (20-36) in question, in order for the said station to send its message.

3. System according to one of Claims 1 and 2, characterized in that each main branch (1-15) has subbranches.

4. System according to one of Claims 1 to 3, characterized in that the frame (D-F) includes flags (F) for the start and end of frame (D-F) which are recognized by the receiving station (20-36), the start-of-frame flag (F) being preceded by two bit-synchronization bytes (D) placed at the head of the frame (D-F).

5. System according to one of Claims 1 to 4, characterized in that the communication protocol allows a frame (D-F) transmission check according to which a dialogue, established between the sending station (20-36) and the receiving station (20-36), allows the sending station to verify that the receiving station can actually receive and allows the receiving station to deliver an acknowledgement of reception of the frame to the sending station.

6. System according to one of Claims 1 to 5, characterized in that the transmission is carried out by radio.

7. System according to Claim 6, characterized in that the transmission is phase-modulated transmission coupled with differential demodulation.

8. System according to one of Claims 4 to 7, characterized in that the output power of each station is controlled so that, when it sends, each station can reach only the geographically neighbouring stations belonging to the same branch or sub-branch as the one to which it belongs, and in that, if one of the stations is defunct, the power of the stations located upstream and downstream, and on the same branch, relative to the defunct station is temporarily increased so that the two said stations upstream and downstream can communicate with each other, means being provided to ensure that the system operates correctly.

9. System according to one of Claims 1 to 8, characterized in that the Master (100) is equipped with a multidirectional antenna and each station is equipped with at least two directional antennas (112, 113) oriented respectively towards at least two stations, a switching means (111) allowing the required antenna to be rendered operational taking into account the transmission direction selected for the current information.

## Patentansprüche

1. Impulsfolgen-Übertragungssystem, bei welchem die Übertragungemittel, die einen Sender (109) und einen Empfänger (108) aufweisen, die auf diesselbe Trägerfrequenz abgestimmt sind, eine Hauptübertragungßeinrichtung oder Master (100) und Nebenübertragungs-Einrichtungen oder Stationen (20-36) umfassen, wobei der Master (100) und die Stationen (20-36) jeweils eine eigene Adresse besitzen und die Stationen (20-36) nur auf Anforderung durch den Master (100) senden können, wobei die von dem System übertragenen Impulse gemäß einem Kommunikationsprotokoll verwaltet werden, welches wenigstens eine Teilfolge (D-F) besitzt, die wenigstens die Adresse (S_{d}) der Bestimmungsstation für die Information, sowie die Adresse (Sr₁, Sr₂) der Relaisstation für die Information aufweist, dadurch gekennzeichnet, daß die Stationen (20-36) geographisch in von dem Master ausgehenden verzweigten Ketten angeordnet sind, wobei jede Kette wenigstens einen Hauptzweig (1-15) aufweist, wobei die Hauptzweige (1-15) sternförmig um den Master (100) angeordnet sind, wobei die Teilfolge (D-F) außerdem die Adresse (Sₑ) der Absendestation der Information aufweist, wobei jede Übertragungseinrichtung einerseits Mittel zum Aufnehmen einer von einer einzelnen ersten Übertragungseinrichtung stammenden Information und zum Weiterleiten dieser Information zu einer anderen einzelnen Übertragungseinrichtung und andererseits Mittel zum Unterbrechen ihrer Empfangsfunktion, sobald ihre Sendefunktion eingeschaltet ist, aufweist, wobei der Funktionszustand jeder Station durch Aussenden einer speziellen Verifikationsfolge überprüft wird, die regelmäßig zu allen Stationen (20-36) permanent gesendet wird.

2. System gemäß Anspruch 1, dadurch gekennzeichnet, daß die spezielle Verifikationsfolge Mittel aufweist, die es ermöglichen, festzustellen, ob eine Station (20-36) eine Nachricht zum Weiterleiten hat, wobei der Empfang dieser Information durch den Master (100) einen durch den Master (100) zu der betreffenden Station (20-36) gesendeten Abfrageprozeß auslöst, damit die Station ihre Nachricht aussendet.

3. System gemäß einem der Ansprüche 1 oder 2, dadurch gekennzeichet, daß jeder Hauptzweig (1-15) Unterzweige aufweist.

4. System gemäß einem der Ansprüche 1 - 3, dadurch gekennzeichnet, daß die Teilfolge (D-F) Teilfolgen-Anfangskennungen (F) und -Endkennungen (D-F) aufweist, die von der Empfangsstation (20-36) erkannt werden, wobei der Teilfolgen-Anfangskennung (F) zwei Synchronisationsbyte vorangehen, die am Kopf der Teilfolge (D-F) angeordnet sind.

5. System gemäß einem der Ansprüche 1 bis 4, dadurch gekennzeichnet, daß das Kommunikationsprotokoll eine Überwachung der Übertragung der Teilfolge (D-F) ermöglicht, gemäß welcher ein Dialog zwischen der Sendestation (20-36) und der Empfangsstation (20-36) hergestellt wird, was der Sendestation ermöglicht, zu verifizieren, daß sich die Empfangsstation im Empfangs zustand befindet und der Empfangsstation ermöglicht, eine Bestätigung des Empfangs der Teilfolge an die Sendestation zu schicken.

6. System gemäß einem der Ansprüche 1 bis 5, dadurch gekennzeichnet, daß die Übertragung auf radioelektrischem Weg stattfindet.

7. System gemäß Anspruch 6, dadurch gekennzeichnet, daß die Übertragung eine mit einer differentiellen Demodulation gekoppelte, phasenmodulierte Übertragung ist.

8. System gemäß einem der Ansprüche 4 bis 7, dadurch gekennzeichnet, daß die Sendeleistung jeder Station so geregelt ist, daß jede Station beim Senden nur die geographisch benachbarten Stationen erreichen kann, die zu demselben Zweig oder Unterzweig gehören, zu dem auch sie gehört und daß, wenn der Betrieb einer der Stationen gestört ist, die Leistung der stromaufwärts und stromabwärts von der defekten Station auf demselben Zweig liegenden Stationen vorübergehend erhöht wird, damit die beiden stromaufwärts und stromabwärts liegenden Stationen miteinander kommunizieren können, wobei Mittel zur Gewährleistung der Funktionstüchtigkeit des Systems vorgesehen sind.

9. System gemäß einem der Ansprüche 1 bis 8, dadurch gekennzeichnet, daß der Master (100) mit einer MehrrichtungsAntenne versehen ist und jede Station mit wenigstens zwei Richtantennen (112,113) ausgerüstet ist, die jeweils auf wenigstens zwei Stationen gerichtet sind, wobei ein Umschaltemittel (111) das Einschalten der Antenne ermöglicht, die unter Berücksichtigung der gewählten Übertragungsrichtung für die anstehende Information notwendig ist.
